(19) Europäisches Patentamt
European Patent Office
Office européen des brevets

(11) **EP 4 600 698 A1**

(12) **EUROPEAN PATENT APPLICATION**
published in accordance with Art. 153(4) EPC

(43) Date of publication:
**13.08.2025  Bulletin 2025/33**

(21) Application number: **23875174.7**

(22) Date of filing: **27.09.2023**

(51) International Patent Classification (IPC):
*G01S 17/894* (2020.01)       *G01S 7/484* (2006.01)
*G01S 7/4911* (2020.01)       *G01S 7/4861* (2020.01)
*G01S 7/4913* (2020.01)       *G01S 7/4912* (2020.01)
*G02B 26/00* (2006.01)        *G02B 27/10* (2006.01)
*G01S 17/931* (2020.01)

(52) Cooperative Patent Classification (CPC):
**G01S 7/484; G01S 7/4861; G01S 7/4911;**
**G01S 7/4912; G01S 7/4913; G01S 17/894;**
**G01S 17/931; G02B 26/00; G02B 27/10**

(86) International application number:
**PCT/KR2023/015096**

(87) International publication number:
**WO 2024/076110 (11.04.2024 Gazette 2024/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **06.10.2022  KR 20220127538**
**14.10.2022  KR 20220132164**

(71) Applicant: **LG INNOTEK CO. LTD**
**Gangseo-gu**
**Seoul 07796 (KR)**

(72) Inventor: **JANG, In Gyu**
**Seoul 07796 (KR)**

(74) Representative: **Plasseraud IP**
**104 Rue de Richelieu**
**CS92104**
**75080 Paris Cedex 02 (FR)**

(54) **LIDAR DEVICE AND OPERATION METHOD THEREFOR**

(57)     Disclosed in an embodiment is a LiDAR device, comprising: an output unit that outputs an optical signal; a distribution unit that distributes the optical signal into a first optical signal and a second optical signal; a receiving unit that receives a third optical signal, which is reflection light of the first optical signal on an object; an interference unit in which interference between the second optical signal and the third optical signal occurs; a detection unit that detects a fourth optical signal, which is interference light generated by means of interference between the second optical signal and the third optical signal, or a fifth optical signal, which is noise; and a depth information generation unit that generates depth information and speed information for an observation target on the basis of the optical signals, wherein the distribution unit adjusts the distribution ratio of the first optical signal and the second optical signal.

FIG. 1

100

| |
|---|
| OUTPUT UNIT — 110 |
| SPLIT UNIT — 120 |
| RECEIVING UNIT — 130 |
| INTERFERENCE UNIT — 140 |
| DETECTION UNIT — 150 |
| DEPTH INFORMATION GENERATION UNIT — 160 |

EP 4 600 698 A1

**Description**

[Technical Field]

Embodiments relate to a LiDAR device and an operation method.

[Background Art]

Light detection and ranging (LiDAR) systems are being applied to various fields, such as aerospace, geology, 3D maps, vehicles, robots, drones, and the like.

Among them, a frequency modulated continuous wave (FMCW) LiDAR is a LiDAR that modulates a frequency of light and simultaneously measures information about a distance and a speed. The FMCW LiDAR measures the speed using the Doppler effect. When waves are reflected from a moving object, a change in a frequency occurs due to the Doppler effect. By detecting such a change in a frequency, the FMCW LiDAR can simultaneously measure a speed and position of an object without time consumption. In addition, the FMCW LiDAR is robust to interference with ambient light and other LiDARs. In addition, since the FMCW LiDAR can measure light using an interferometer, interaction with signals other than those transmitted from the LiDAR can be blocked.

To cause interference with reflected light, an optical signal generated by the FMCW LiDAR is split, and a signal-to-noise ratio varies according to a split ratio, which affects a detection rate. However, since the split ratio cannot be changed, an output intensity of the optical signal is inevitably adjusted even when a measurement environment affects the signal-to-noise ratio.

Accordingly, there is a need for a method of changing a split ratio of an optical signal to maintain the signal-to-noise ratio or generate an optimal signal-to-noise ratio.

In addition, the FMCW LiDAR detects several pixels divided from an image of a detection target, and in this case, when one laser is used, an exposure time assigned to one pixel is reduced. When the exposure time is reduced, the intensity of the signal decreases, and the maximum calculatable distance in the same frequency modulation range decreases. In addition, when the maximum calculatable distance is kept constant, a frequency modulation speed of a laser should be inevitably increased. When the frequency modulation speed increases, the intensity of the laser can decrease.

Accordingly, there is a need for a method of adjusting an exposure time when detecting a signal to improve the performance of a LiDAR.

[Disclosure]

[Technical Problem]

Embodiments are directed to providing a LiDAR device capable of adjusting a split ratio of an optical signal, and an operation method.

In addition, embodiments are directed to providing a LiDAR device capable of adjusting a split ratio of an optical signal according to a change in noise, such as ambient light, to maintain a signal-to-noise ratio, and an operation method.

In addition, embodiments are directed to providing a LiDAR device capable of detecting a change in noise, such as ambient light, in real time to automatically adjust a split ratio of an optical signal, and an operation method.

In addition, embodiments are directed to providing a LiDAR device capable of modulating a frequency of an optical signal to any waveform and adjusting a detection unit of a detection target, and an operation method.

In addition, embodiments are directed to providing a LiDAR device capable of increasing an exposure time of an optical signal for one detection unit, and an operation method.

In addition, embodiments are directed to providing a LiDAR device capable of decreasing a distance resolution even when using the same optical signal output, and an operation method.

In addition, embodiments are directed to providing a LiDAR device capable of increasing a maximum measurement distance or decreasing a frequency modulation speed even when using the same optical signal output, and an operation method.

Objects of embodiments are not limited thereto and may also include objects or effects that may be identified from configurations or embodiments, which will be described below.

[Technical Solution]

A LiDAR device according to an embodiment may include an output unit configured to output an optical signal, a split unit configured to split the optical signal into a first optical signal and a second optical signal, a receiving unit configured to receive a third optical signal, which is reflected light of the first optical signal from an object, an interference unit configured to cause interference between the second optical signal and the third optical signal, a detection unit configured to detect a fourth optical signal, which is interference light generated by the interference which is noise, and a depth information generation unit configured to generate depth information and speed information of an observation target based on the optical signal, wherein the split unit may adjust a split ratio of the first optical signal and the second optical signal.

The split ratio may be based on Equations 1, 2, and 3,

[Equation 1]

$$P0 = P1 + P2$$

[Equation 2]

$$P1 = (1 - x) P0$$

[Equation 3]

$$P2 = xP0$$

(P0 denotes power of the optical signal, P1 denotes power of the first optical signal, P2 denotes power of the second optical signal, and x denotes a variable of 0 or more and 1 or less).

The split unit may adjust the split ratio so that a ratio of power of the fourth optical signal to power of the fifth optical signal is present within a predetermined range.

The ratio of the power of the fourth optical signal to the power of the fifth optical signal may be based on Equation 4,

[Equation 4]

$$SNR = \frac{4R^2 x(1-x)Loss P_0^2}{2eBRx P_O + 2eBR(1-x)Loss P_0 + <i_{others}^2>}$$

(SNR is a ratio of the power of the fourth optical signal to the power of the fifth optical signal, R denotes a response, Loss denotes a degree of loss of reflected light, e denotes a charge of electrons, B denotes a frequency bandwidth of a system, and $i_{others}$ denotes noise dispersion of the fifth optical signal).

The split ratio may be determined by the x in which the ratio of the power of the fourth optical signal to the power of the fifth optical signal according to Equation 4 is maximum.

The split unit may adjust the split ratio according to a change in the fifth optical signal.

The split unit may increase the x when the power of the fifth optical signal increases and decrease the x when the power of the fifth optical signal decreases.

The detection unit may detect the change in the fifth optical signal in real time, and the split unit may automatically adjust the split ratio according to the change in the fifth optical signal detected in real time.

The split unit may include a first split unit and a second split unit, the optical signal may sequentially pass through the first split unit and the second split unit, the first split unit may be rotated to adjust a polarization angle of the optical signal, and the second split unit may allow vertically polarized light of the optical signal passing through the first split unit to pass therethrough and reflect horizontally polarized light thereof to adjust the split ratio.

The first split unit may be a half wave plate (HWP), and the second split unit may be a polarizing beam splitter (PBS).

The split unit may include a third split unit, a fourth split unit, and a fifth split unit, the optical signal may sequentially pass through the third split unit and the fourth split unit or sequentially pass through the third split unit and the fifth split unit, and the third split unit may move a path of the optical signal to adjust the split ratio of the optical signal split to the fourth split unit or the fifth split unit.

The third split unit, the fourth split unit, and the fifth split unit may be waveguides, and the third split unit may adjust the split ratio by changing an area in contact with the fourth split unit or the fifth split unit.

A LiDAR operation method according to an embodiment includes operating a LiDAR device and checking weather, a current time, or a signal of an illuminance sensor, setting power of ambient light according to the weather, the current time, or the signal of the illuminance sensor using a reference table, and changing, by a split unit of the LiDAR device, a split ratio of an optical signal to adjust a signal-to-noise ratio, which is a ratio of power of the optical signal to the set power of the ambient light, wherein the split ratio is a ratio of the optical signal split to incident light emitted to an observation target and reference light for interference.

The LiDAR operation method may include generating depth information and speed information of the observation target through interference between the incident light and the reference light.

The split ratio may be based on Equations 1, 2, and 3,

$$[\text{Equation 1}]$$

$$P0 = P1 + P2$$

$$[\text{Equation 2}]$$

$$P1 = (1 - x) P0$$

$$[\text{Equation 3}]$$

$$P2 = xP0$$

(P0 denotes power of the optical signal, P1 denotes power of the first optical signal, P2 denotes power of the second optical signal, and x denotes a variable of 0 or more and 1 or less).

The signal-to-noise ratio may be based on Equation 4.

$$[\text{Equation 4}]$$

$$\text{SNR} = \frac{4R^2 x(1-x)LossP_0^2}{2eBRxP_0 + 2eBR(1-x)LossP_0 + <i_{others}^2>}$$

(SNR is a signal-to-noise ratio, R denotes a response, Loss denotes a degree of loss of reflected light, e denotes a charge of electrons, B denotes a frequency bandwidth of a system, $i_{others}$ denotes noise dispersion of the ambient light).

The split unit may adjust the split ratio according to a change in the set power of the ambient light, increase the x when the power of the ambient light increases, decrease the x when the power of the ambient light decreases, and automatically adjust the split ratio according to the change in the optical signal detected in real time.

A LiDAR device according to the embodiment includes a light output device (VCSEL) for outputting an optical signal, a plurality of lens groups for condensing the optical signal and outputting the condensed optical signal to the outside, a light detection device (SPAD) for detecting a first signal generated from the optical signal reflected from an observation target and a second signal that is ambient light, a depth information generation unit for generating depth information of the observation target based on the optical signal and the first signal, a split unit for comparing an intensity of the first signal with an intensity of the second signal and adjusting a split ratio of the optical signal, and a memory for storing data on a signal-to-noise ratio adjusted according to the change in the split ratio.

A LiDAR device according to the embodiment includes an output unit for outputting an optical signal, a receiving unit for receiving input optical signals for a plurality of points of an object that are reflected back from the object, an interference unit for causing interference between the input optical signal and reference light to generate an interference optical signal, a detection unit for detecting the input optical signal, a depth information generation unit for generating depth information of the object based on the input optical signal, and a control unit for adjusting a frequency of the optical signal, wherein the control unit may be set to modulate a waveform of the frequency of the optical signal, and the depth information generation unit may generate the depth information using data on input optical signals of some continuous points among the plurality of points.

The depth information generation unit may generate depth information of a first pixel using first to $i^{th}$ data for input optical signals of first to $i^{th}$ points (i is an integer greater than or equal to 1).

The depth information generation unit may generate depth information of a second pixel using second to $(i+1)^{th}$ data for input optical signals of second to $(i+1)^{th}$ points.

The depth information generation unit may generate depth information from the second pixel to an $(m-i+1)^{th}$ pixel using $(m-i+1)^{th}$ to $m^{th}$ data for input optical signals of $(m-i+1)^{th}$ to $m^{th}$ points (m is an integer greater than or equal to i)

The depth information generation unit of the LiDAR device may repeat a process of generating the depth information of the first to $(m-i+1)^{th}$ pixels.

A cycle of the waveform of the frequency of the optical signal may be the same as an exposure time of one of the points, and the exposure time of one of the pixels may be i times the exposure time of the input optical signal of the one of the points.

The depth information generation unit may generate the depth information using data on the interference optical signal for some continuous points among the plurality of points.

The control unit may increase the cycle of the waveform of the frequency of the optical signal as much as j times.

A cycle of the waveform of the frequency of the optical signal may be the same as an exposure time of one of the points, and the exposure time of one of the pixels may be the same as the exposure time of the input optical signal of the one of the points.

A LiDAR operation method according to an embodiment includes receiving, by a receiving unit, reflected light reflected from a plurality of points of an object, detecting, by a detection unit, reflected light reflected from first to $i^{th}$ points, and generating, by a depth information generation unit, depth information of a first pixel using first to $i^{th}$ data generated by detecting the reflected light reflected from first to $i^{th}$ points (i is an integer greater than or equal to 1).

The LiDAR operation method according to the embodiment may include detecting, by the detection unit, reflected light reflected from an $(i+1)^{th}$ point, and generating, by the depth information generation unit, depth information of a second pixel using second to $(i+1)^{th}$ data generated by detecting the reflected light reflected from second to $(i+1)^{th}$ points.

The LiDAR operation method according to the embodiment may include repeatedly detecting, by the detection unit, reflected light reflected from an $m^{th}$ point, and repeatedly generating, by the depth information generation unit, depth information up to an $(m-i+1)^{th}$ pixel using $(m-i+1)^{th}$ to $m^{th}$ data generated by detecting the reflected light reflected from the $(m-i+1)^{th}$ to m points (m is an integer greater than or equal to i).

The depth information generation unit of the LiDAR device may repeat a process of generating the depth information of the first to $(m-i+1)^{th}$ pixels.

A cycle of the waveform of the frequency of the optical signal may be the same as an exposure time of one of the points, and the exposure time of one of the pixels may be i times the exposure time of the input optical signal of the one of the points.

The LiDAR operation method according to the embodiment may include increasing, by the control unit, the cycle of the waveform of the frequency of the optical signal as much as j times.

A cycle of the waveform of the frequency of the optical signal may be the same as an exposure time of one of the points, and the exposure time of one of the pixels may be the same as the exposure time of the input optical signal of the one of the points.

A LiDAR device according to the embodiment includes an optical output device (vertical cavity surface emitting layer (VCSEL)) for outputting an optical signal, a plurality of lens groups for condensing the optical signal and outputting the condensed optical signal to the outside, an optical detection device for detecting the input optical signal that is reflected back from a plurality of points of an observation target, and a depth information generation unit for generating depth information of the observation target based on the optical signal and the input optical signal, in which the depth information generation unit may generate the depth information using data on input optical signals for some continuous points among a plurality of points.

[Advantageous Effects]

According to embodiments, it is possible to implement a LiDAR device capable of adjusting a split ratio of an optical signal, and an operation method.

In addition, it is possible to implement a LiDAR device capable of adjusting a split ratio of an optical signal according to a change in noise, such as ambient light, to maintain a signal-to-noise ratio, and an operation method.

In addition, it is possible to implement a LiDAR device capable of detecting a change in noise, such as ambient light, in real time to automatically adjust a split ratio of an optical signal, and an operation method.

In addition, it is possible to implement a LiDAR device capable of modulating a frequency of an optical signal to any waveform and adjusting a detection unit of a detection target, and an operation method.

In addition, it is possible to implement a LiDAR device capable of increasing an exposure time of an optical signal for one detection unit, and an operation method.

In addition, it is possible to implement a LiDAR device capable of decreasing a distance resolution even when using the same optical signal output, and an operation method.

In addition, it is possible to implement a LiDAR device capable of increasing a maximum measurement distance or decreasing a frequency modulation speed even when using the same optical signal output, and an operation method.

Various and beneficial advantages and effects of the present invention are not limited to the above-described contents and will be more readily understood during a process of describing specific embodiments of the present invention.

[Description of Drawings]

FIG. 1 is a configuration diagram of a LiDAR device according to an embodiment.

FIG. 2 is a schematic conceptual diagram of an operation principle of the LiDAR device according to the embodiment.

FIG. 3 is a schematic conceptual diagram of the LiDAR device according to the embodiment.

FIG. 4 is a graph illustrating a change in an optimal split ratio according to a change in noise according to an embodiment.

FIG. 5 is a conceptual diagram of a split unit of the LiDAR device according to the embodiment.

FIG. 6 is a conceptual diagram of a split unit of a LiDAR device according to another embodiment.

FIG. 7 is a flowchart of a LiDAR operation method according to an embodiment.

FIG. 8 is a configuration diagram of a LiDAR device according to an embodiment.

FIG. 9 is a schematic conceptual diagram of the LiDAR device according to the embodiment.

FIG. 10 is an image illustrating an operation principle of the LiDAR device according to the embodiment.

FIG. 11 is a graph illustrating waveforms of frequencies of an optical signal of the LiDAR device according to the embodiment.

FIG. 12 is an image illustrating a detecting method of a conventional LiDAR device.

FIG. 13 is an image illustrating a detecting method of the LiDAR device according to the embodiment.

FIG. 14 is an image illustrating a detecting method of a LiDAR device according to another embodiment.

FIG. 15 is a flowchart of a LiDAR operation method according to an embodiment.

FIG. 16 is an exploded view of the LiDAR device according to the embodiment.

[Modes of the Invention]

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

A light detection and ranging (LiDAR) device according to an embodiment of the present invention may refer to an information generating device mounted on a vehicle to measure a distance between the vehicle and an object and generate distance information but is not limited thereto. The LiDAR device according to the embodiment of the present invention may be a LiDAR camera. The LiDAR device according to the embodiment of the present invention may extract depth information using a time of flight (ToF) principle. In the present specification, the LiDAR device may be referred to as a depth information generating device or a camera device.

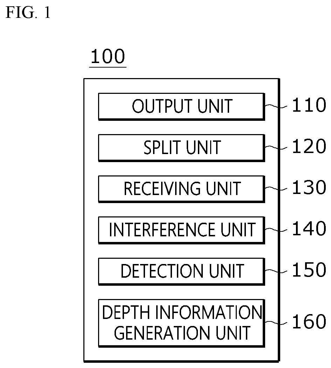

FIG. 1 is a configuration diagram of a LiDAR device according to an embodiment.

Referring to FIG. 1, a LiDAR device 100 according to an embodiment may include an output unit 110, a split unit 120, a receiving unit 130, an interference unit 140, a detection unit 150, and a depth information generation unit 160. Only components related to the present embodiments are illustrated in the LiDAR device 100 illustrated in FIG. 1. Accordingly, it is obvious to those skilled in the art that the LiDAR device 100 may further include other general components in addition to the components illustrated in FIG. 1.

The LiDAR device 100 may be a frequency modulated continuous wave (FMCW) LiDAR. In addition, the LiDAR device 100 may use a point scanning method, and thus the intensity of light received by the detection unit 150 may be lower than that in other methods, for example, a flash method. Accordingly, an avalanche photo diode (APD) or a single photon avalanche diode (SPAD) having high sensitivity may be adopted as the detection unit 150. A specific circuit configuration such as an analog front end (AFE), a time to digital converter (TDC), or the like may vary according to which light receiving element among the APD or the SPAD is included in the detection unit 150.

The LiDAR device 100 according to the embodiment may measure a distance and speed of a detection target using the Doppler effect. When waves are reflected from a moving object, the frequency of the optical signal may be changed by the Doppler effect. By detecting such a change in a frequency, a speed and position of the object may be measured simultaneously without time consumption. The Doppler effect is a phenomenon in which the wavelength of an electromagnetic wave measured by an observer differs from the wavelength in a laboratory when an object emitting electromagnetic waves (light) moves toward or away from the observer. When the object emitting electromagnetic waves moves toward the observer, the wavelength of the observed electromagnetic wave is shorter, and when the object moves away from the observer, the wavelength of the observed electromagnetic wave is longer.

The LiDAR device according to the embodiment may include the output unit 110 for outputting an optical signal, the split unit 120 for splitting the optical signal to a first optical signal and a second optical signal, the receiving unit 130 for receiving a third optical signal, which is reflected light of the first optical signal on an object, the interference unit 140 for causing interference between the second optical signal and the third optical signal, the detection unit 150 for detecting a fourth optical signal, which is interference light generated by the interference between the second optical signal and the third optical signal, or a fifth optical signal, which is noise, and the depth information generation unit 160 for generating depth information of an observation target based on the fourth optical signal.

The output unit 110 may output the optical signal and transmit the optical signal to the split unit 120.

The output unit 110 may include a light source such as an edge light emitting laser, a vertical cavity surface emitting laser (VCSEL), a distributed feedback laser, a light emitting diode (LED), a super luminescent diode (SLD), or the like. The output unit 110 may generate and emit light in a plurality of different wavelength bands or having different frequencies. The output unit 110 may generate pulsed light or continuous light. The continuous light may be in the form of a sinusoid wave or a squared wave. By generating the output optical signal in the form of pulsed light or continuous light, the LiDAR device 100 may detect a time difference or phase difference between the output optical signal output from the output unit 110 and an input optical signal input to the receiving unit 130 after reflected from the object. In the present specification, the output optical signal may be referred to as an optical signal, and the object may be referred to as an observation target. From the perspective of the observation target, the output optical signal may be incident light.

The output unit 110 may include a light source, a lens group disposed on the light source, and a diffusion member disposed on the lens group. The light source generates and outputs light. The light generated by the light source may be infrared (IR) rays having a wavelength of 770 to 3000 nm. Alternatively, the light generated by the light source may be visible light having a wavelength of 380 to 770 nm. The light source may use LEDs and have a form in which a plurality of light emitting diodes are arranged in a predetermined pattern. In addition, the light source may include organic light emitting diodes (OLEDs) or laser diodes (LDs). Alternatively, the light source may include a VCSEL. The VCSEL is one of LDs for converting an electric signal into an optical signal and may output light having a wavelength of about 800 to 1000 nm, for example, the wavelength of about 850 nm or about 940 nm. The light source repeats turning on/off at a predetermined time interval to generate an output optical signal in the form of a pulse wave or a continuous wave. The predetermined time interval may be related to the frequency of the output optical signal.

The lens group may condense light output from a light source and output the condensed light to the outside. The lens group may be disposed to be spaced apart from the light source above the light source. Here, the "above" of "above the light source" may refer to a side to which light is output from the light source. The lens group may include at least one lens. When the lens group includes a plurality of lenses, the lenses may be aligned based on a central axis to form an optical system. Here, the central axis may be the same as an optical axis of the optical system.

The diffusion member may receive the light output from the light source and the lens group, refract or diffract the received light, and output the refracted or diffracted light.

The split unit 120 according to the embodiment may split the optical signal into a plurality of optical signals.

The split unit 120 may receive the optical signal from the output unit 110 and split the optical signal into the first optical signal and the second optical signal. The first optical signal is transmitted to the receiving unit 130, and the second optical signal is transmitted to the interference unit 140.

The split unit 120 may adjust a split ratio of the first optical signal and the second optical signal. A split method of the optical signal of the split unit 120 is not limited and may include a method using polarization and the like.

The receiving unit 130 may transmit an optical signal to an object or receive an optical signal reflected back from the object. In this case, the received reflected light may be an optical signal that is output by the output unit 110 and reflected from the object.

The receiving unit 130 may include an image sensor, a filter disposed on the image sensor, and a lens group disposed on the filter. The optical signal reflected from the object may pass through the lens group. The optical axis of the lens group may be aligned with the optical axis of the image sensor. The filter may be disposed between the lens group and the image sensor. The filter may be disposed on an optical path between the object and the image sensor. Light in a predetermined wavelength range may pass the filter. Light in a specific wavelength band may pass the filter. The filter may transmit light having a specific wavelength. For example, light in an infrared band may pass the filter, and the filter may block light other than light in the infrared band. The image sensor may detect light. The image sensor may receive an optical signal. The image sensor may detect the optical signal and output the detected optical signal as an electrical signal. The image sensor may detect light having a wavelength corresponding to the wavelength of light output by the light source. For example, the image sensor may detect light in an infrared band.

The image sensor may be formed to have a structure in which a plurality of pixels are arranged in the form of a grid. The image sensor may be a complementary metal oxide semiconductor (CMOS) image sensor or a charge coupled device (CCD) image sensor. In addition, the image sensor may include a ToF sensor for receiving IR light reflected from an object and measuring a distance using a time difference or phase difference.

The receiving unit 130 may receive the first optical signal from the output unit 110, and the receiving unit 130 may receive the first optical signal and transmit the first optical signal to the object. In addition, the receiving unit 130 may receive a third optical signal, which is reflected light of the first optical signal reflected back from the object. Here, the receiving unit 130 may correspond to an optical system including a plurality of lenses, and the receiving unit 130 may be positioned on the output unit 110 and the interference unit 140.

The interference unit 140 may cause interference between the second optical signal and the third optical signal. Since the LiDAR device 100 according to the embodiment measures a change in interference light between the second optical signal and the third optical signal when the frequency of the optical signal is changed, the interference unit 140 for causing interference may be present.

The interference unit 140 may receive the third optical signal from the receiving unit 130 and receive the second optical signal from the split unit 120. The interference unit 140 may cause interference between the received second and third optical signals. In addition, the interference unit 140 may transmit the fourth optical signal, which is interference light generated by interference, to the detection unit 150.

The detection unit 150 may receive and detect an optical signal. The detection unit 150 may include a plurality of photodiodes, which may be light receiving elements that generate electric signals by light energy. The type of the light receiving element is not particularly limited.

The detection unit 150 may receive and detect the fourth optical signal from the interference unit 140. In addition, the detection unit 150 may receive and detect the fifth optical signal, which is noise, from the outside. The noise may include various types of light incident on the detection unit 150 in addition to sunlight. The noise may include dark noise, thermal noise, and the like, which are the characteristics of the detection unit 150. Since the fifth optical signal is affected by sunlight or the like, its intensity may change in real time. The greater the intensity of the fifth optical signal, the more difficult it may be to detect the fourth optical signal.

The depth information generation unit 160 may generate depth information and speed information of the object using the fourth optical signal output from the interference unit 140. The fourth optical signal may correspond to the result of interference between the third optical signal reflected from the object and the second optical signal output from the split unit 120. That is, the fourth optical signal corresponds to the result of the Doppler effect occurring for the second optical signal and the third optical signal. The fourth optical signal includes the depth information and speed information about the object due to the Doppler effect. The depth information generation unit 160 may receive the fourth optical signal and the fifth optical signal and derive information about the object.

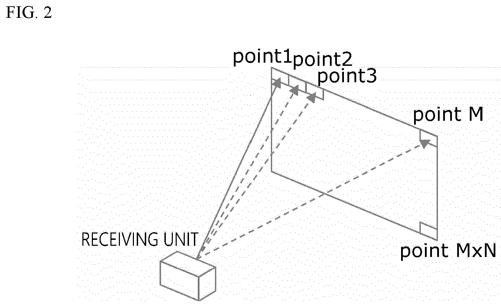

FIG. 2 is a schematic conceptual diagram illustrating an operation principle of the LiDAR device according to the embodiment.

The LiDAR device may generally be composed of components such as a laser, a scanner, and a photodiode. Each component may have any form. Various optical components may be present between the laser and the scanner, the scanner and the observation target, and the scanner and the photodiode. A frequency of the laser may be modulated. The optical signal of the laser may be split into incident light and reference light. The incident light may move to the observation target through the scanner and then may be reflected back from the observation target. The reflected light reflected back from the observation target may be attenuated by the amount of loss. The reflected light reflected back from the observation target and the reference light may interfere to generate a beat frequency. The distance and speed to the observation target may be measured based on such a beat frequency.

Referring to FIG. 2, the LiDAR device according to the embodiment may be a scanning type LiDAR. The receiving unit (a scanner) may calculate a distance while scanning M*N points. In this case, a signal-to-noise ratio of the optical signal may be determined according to ambient light and noise inside the detection unit (the photodiode). In this case, a ratio of the optical signal being split into incident light and reference light can be optimized to generate the best signal-to-noise ratio. Ultimately, the best signal-to-noise ratio may be obtained according to output power of the given output unit (the laser). In addition, the output power of the laser for obtaining the same signal-to-noise ratio can be reduced.

FIG. 23 is a schematic conceptual diagram of the LiDAR device according to the embodiment.

Referring to FIG. 23, the split unit 120 of the LiDAR device 100 according to the embodiment may adjust the split ratio of the first optical signal and the second optical signal.

The split unit 120 may receive the optical signal from the output unit and split the optical signal into the first optical signal and the second optical signal. The split unit 120 may transmit the first optical signal to the receiving unit and the second optical signal to the interference unit 140.

The split ratio of the LiDAR device according to the embodiment may be based on split ratios of Equations 1, 2, and 3.

[Equation 1]

$$P0 = P1 + P2$$

[Equation 2]

$$P1 = (1 - x)P0$$

[Equation 3]

$$P2 = xP0$$

(P0 denotes power of the optical signal, P1 denotes power of the first optical signal, P2 denotes power of the second optical signal, and x denotes a variable of 0 or more and 1 or less).

The sum of the power of the first optical signal and the power of the second optical signal may correspond to the power of the optical signal output by the output unit. When the sum of the power of the first optical signal and the power of the second optical signal is constant, the power of the first optical signal and the power of the second optical signal may be split at a ratio of (1-x) or x according to x, which is a variable of 0 or more and 1 or less.

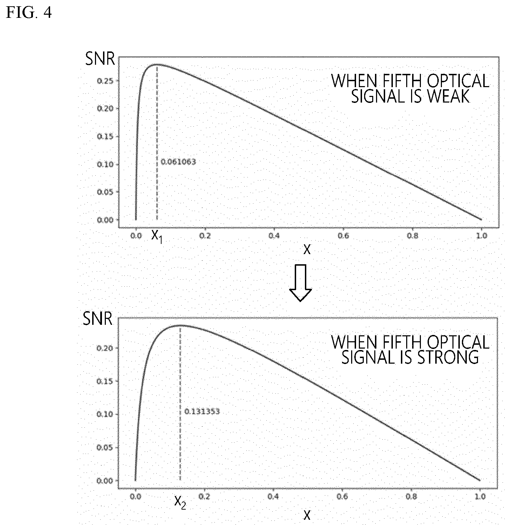

FIG. 4 is a graph illustrating a change in an optimal split ratio according to a change in noise according to an embodiment.

Referring to FIG. 4, the split unit of the LiDAR device according to the embodiment may adjust the split ratio so that a ratio of the power of the fourth optical signal to the power of the fifth optical signal is present within a predetermined range.

When the LiDAR device detects an optical signal, noise may be present and thus may also be detected. Accordingly, the optical signal cannot be easily detected. As a result, when the intensity of the noise is great and the signal-to-noise ratio (SNR) is low, there is a need for a method of increasing an SNR. In addition, since noise may change various types of light including sunlight, heat, the characteristics of the detection unit, and the like, there is a need for a method of maintaining an SNR in real time.

When the split ratio of the split unit of the LiDAR device according to the embodiment is changed, a value of the SNR is changed. When the ratio of the power of the fourth optical signal to the power of the fifth optical signal is changed, the split ratio of the split unit may be adjusted so that the SNR is maintained within a predetermined range.

When comparing optimal x values that maximize SNRs when the fifth optical signal of the LiDAR device according to the embodiment is weak and when the fifth optical signal is strong, the optimal x value when the fifth optical signal is strong may be greater than the optimal x value when the fifth optical signal is weak.

When the fifth optical signal of the LiDAR device according to the embodiment is weak, x1, which is the optimal x value, may be 0.061063, and when the fifth optical signal is strong, x2, which is the optimal x value, may be 0.131353.

The ratio of the power of the fourth optical signal to the power of the fifth optical signal of the LiDAR device according to the embodiment may be based on Equation 4.

[Equation 4]

$$SNR = \frac{4R^2 x(1-x)LossP_0^2}{2eBRxP_O + 2eBR(1-x)LossP_0 + <i_{others}^2>}$$

(SNR is a ratio of the power of the fourth optical signal to the power of the fifth optical signal, R denotes a response, Loss denotes a degree of loss of reflected light, e denotes a charge of electrons, B denotes a frequency bandwidth of a system, and $i_{others}$ denotes noise dispersion of the fifth optical signal).

The ratio of the power of the fourth optical signal to the power of the fifth optical signal according to the embodiment may be the ratio of the dispersion of the fourth optical signal to the dispersion of the fifth optical signal.

The split ratio of the LiDAR device according to the embodiment may be determined according to x in which the ratio of the power of the fourth optical signal to the power of the fifth optical signal according to Equation 4 is maximum.

The split unit may adjust the split ratio according to x which is the maximum SNR.

By differentiating the ratio of the power of the fourth optical signal to the power of the fifth optical signal with respect to x, x which is the maximum ratio of the power of the fourth optical signal to the power of the fifth optical signal may be determined.

x which is the maximum ratio of the power of the fourth optical signal to the power of the fifth optical signal may be determined according to Equation 5.

[Equation 5]

$$x = \frac{[2eBRP_0Loss+<i^2_{others}>] - \sqrt{[2eBRP_0Loss+<i^2_{others}>] \cdot [2eBRP_0+<i^2_{others}>]}}{-2eBRP_0(1-Loss)}$$

x which is the maximum ratio of the power of the fourth optical signal to the power of the fifth optical signal may be determined according to Equation 5.

[Equation 6]

$$x \approx \frac{<i^2_{others}> - \sqrt{<i^2_{others}> \cdot [2eBRP_0+<i^2_{others}>]}}{-2eBRP_0}$$

Loss denotes a degree of loss of the third optical signal (the reflected light), and when the degree of loss of the third optical signal is very small, Loss may be ignored, and x which is the maximum ratio of the fourth optical signal to the fifth optical signal may be determined.

The split unit of the LiDAR device according to the embodiment may adjust the split ratio according to a change in the fifth optical signal.

The fifth optical signal is a noise signal, and when the detection unit detects the optical signal, noise may be present and thus may also be detected. Accordingly, the optical signal cannot be easily detected. As a result, when the intensity of the noise increases and the SNR is low, there is a need for a method of increasing an SNR. In addition, since noise may change various types of light including sunlight, heat, the characteristics of the detection unit, and the like, there is a need for a method of maintaining an SNR in real time. Accordingly, the split unit may adjust the split ratio according to the change in the fifth optical signal to adjust the SNR.

The split unit of the LiDAR device according to the embodiment may increase x when the power of the fifth optical signal increases and decrease x when the power of the fifth optical signal decreases.

When the power of the fifth optical signal increases and the ratio of the power of the fourth optical signal to the power of the fifth optical signal increases, the optimal SNR may be maintained by increasing x, and when the power of the fifth optical signal decreases and the ratio of the power of the fourth optical signal to the power of the fifth optical signal decreases, the optimal SNR may be maintained by decreasing x.

The detection unit of the LiDAR device according to the embodiment may detect the change in the fifth optical signal in real time, and the split unit may automatically adjust the split ratio according to the change in the fifth optical signal detected in real time.

The fifth optical signal is a noise signal and may change in real time according to a change in sunlight, weather, or the like. Accordingly, to prevent the SNR from continuously changing in real time, the detection unit may measure the fifth optical signal in real time and detect the change in the fifth optical signal in real time, and the split unit may automatically adjust the split ratio according to the change in the fifth optical signal detected in real time.

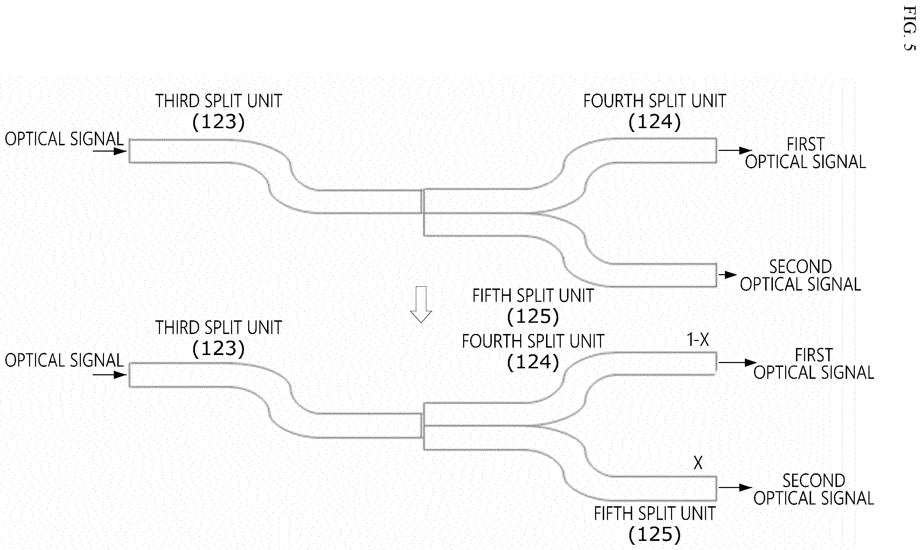

FIG. 5 is a conceptual diagram of a split unit of the LiDAR device according to the embodiment.

Referring to FIG. 5, the split unit of the LiDAR device according to the embodiment includes a first split unit 121 and a second split unit 122, and the optical signal sequentially passes through the first split unit 121 and the second split unit 122. The split unit may adjust a polarization angle of the optical signal by rotating the first split unit 121, and the second split unit 122 may adjust the split ratio by allowing vertically polarized light of the optical signal passing through the first split unit 121 to pass therethrough and reflecting horizontally polarized light thereof.

The split unit according to the embodiment may include the first split unit 121 and the second split unit 122. The first split unit 121 and the second split unit 122 may be disposed in parallel on a path of the optical signal but are not limited thereto. The optical signal may sequentially pass through the first split unit 121 and the second split unit 122.

The first split unit 121 may change the polarization angle according to the angle of the optical signal. For example, a polarization direction of a linearly polarized signal before and after passing through the first split unit 121 has a 90-degree difference from a polarization direction of the linearly polarized signal before passing through the first split unit 121. A circularly polarized signal may not be affected even after passing through the first split unit 121. The first split unit 121 may be formed of a material having a different refractive index according to the polarization direction.

The second split unit 122 may allow the vertically polarized light of the incident optical signal to pass therethrough and reflect the horizontally polarized light thereof. For example, the second split unit 122 may allow the vertically polarized light of the optical signal to pass therethrough to be the first optical signal and reflect the horizontally polarized light of the optical signal to be the second optical signal.

The split unit may adjust the polarization angle by rotating the first split unit 121 to adjust the split ratio of the optical signal. That is, the split unit may adjust the SNR by rotating the first split unit 121.

The first split unit 121 of the LiDAR device according to the embodiment may be a half wave plate (HWP), and the second split unit 122 may be a polarizing beam splitter (PBS).

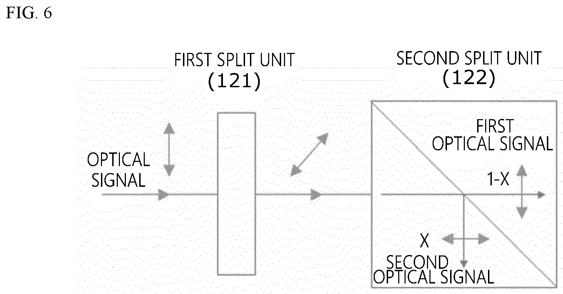

FIG. 6 is a conceptual diagram of a split unit of a LiDAR device according to another embodiment.

Referring to FIG. 6, the split unit of the LiDAR device according to the embodiment may include a third split unit 123, a fourth split unit 124, and a fifth split unit 125, the optical signal may sequentially pass through the third split unit 123 and the fourth split unit 124 or sequentially pass through the third split unit 123 and the fifth split unit 125, and the third split unit 123 may adjust the split ratio of the optical signal split to the fourth split unit 124 or the fifth split unit 125 by moving the path of the optical signal.

The third split unit 123, the fourth split unit 124, and the fifth split unit 125 of the LiDAR device according to the embodiment are waveguides, and the third split unit 123 may adjust the split ratio of the optical signal by changing an area in contact with the fourth split unit 124 or the fifth split unit 125.

The third split unit 123, the fourth split unit 124, and the fifth split unit 125 may be hollow conduits formed of a conductor. The third to fifth split units 123, 124, and 125 may have a structure in which an optical signal may pass through the inside of a tube. When the optical signal is incident on the third split unit 123, the fourth split unit 124, and the fifth split unit 125, the optical signal may be discharged after uniformly passing through the inside of the tube structure.

The third split unit 123 may change an area in contact with the fourth split unit 124 or the fifth split unit 125. The fourth split unit 124 and the fifth split unit 125 may be structured in vertical contact with each other, and a cross section of the tube structure of the third split unit 123 may be structured in contact with a cross section of the tube structure of the fourth split unit 124 or the fifth split unit 125. Accordingly, the split unit may adjust the split ratio of the optical signal by vertically moving the third split unit 123 while in contact with the fourth split unit 124 and the fifth split unit 125. The split unit may adjust the split ratio of the optical signal by moving the third split unit 123 and thus adjust the SNR.

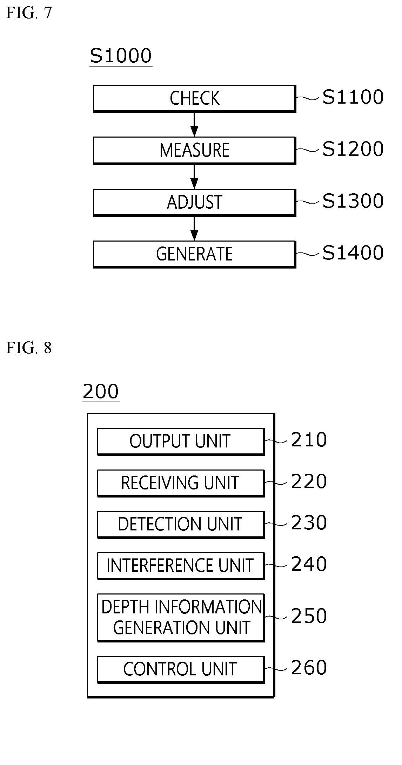

FIG. 7 is a flowchart of a LiDAR operation method according to an embodiment.

Referring to FIG. 7, a LiDAR operation method S1000 according to the embodiment may include operating a LiDAR device and checking weather, a current time, or a signal of an illuminance sensor (S1100), setting power of ambient light according to the signal of the weather, the current time, or the illuminance sensor using a reference table (S1200), changing, by a split unit of the LiDAR device, a split ratio of an optical signal to adjust an SNR, which is a ratio of power of the optical signal to the set power of the ambient light, wherein the split ratio is a ratio of an optical signal split to incident light emitted to an observation target and reference light for interference (S1300), and generating depth information and speed information of the observation target through interference of the incident light and the reference light (S1400).

The split ratio of the LiDAR operation method according to the embodiment may be based on Equations 1, 2, and 3.

$$[\text{Equation 1}]$$

$$P0 = P1 + P2$$

$$[\text{Equation 2}]$$

$$P1 = (1 - x)\, P0$$

$$[\text{Equation 3}]$$

$$P2 = xP0$$

(P0 denotes power of the optical signal, P1 denotes power of the incident light, P2 denotes power of the reference light, and x denotes a variable of 0 or more and 1 or less).

The SNR of the LiDAR operation method according to the embodiment may be based on Equation 4.

[Equation 4]

$$SNR = \frac{4R^2x(1-x)LossP_0^2}{2eBRxP_0 + 2eBR(1-x)LossP_0 + <i_{others}^2>}$$

(SNR is a signal-to-noise ratio, R denotes a response, Loss denotes a degree of loss of reflected light, e denotes a charge of electrons, B denotes a frequency bandwidth of a system, $i_{others}$ denotes noise dispersion of the ambient light).

The split unit for the LiDAR operation method according to the embodiment may adjust the split ratio according to the change in the power of the ambient light, increase x when the power of the ambient light increases, decrease x when the power of the ambient light decreases, and automatically adjust the split ratio according to the change in the optical signal detected in real time.

The LiDAR device according to the embodiment may include a light output device (VCSEL) for outputting an optical signal, a plurality of lens groups for condensing the optical signal and outputting the condensed optical signal to the outside, a light detection device (SPAD) for detecting a first signal generated from the optical signal reflected from an observation target and a second signal that is ambient light, a depth information generation unit for generating depth information of the observation target based on the optical signal and the first signal, a split unit for comparing an intensity of the first signal with an intensity of the second signal and adjusting a split ratio of the optical signal, and a memory for storing data on an SNR adjusted according to the change in the split ratio.

FIG. 8 is a configuration diagram of a LiDAR device according to an embodiment.

Referring to FIG. 8, a LiDAR device 200 according to an embodiment may include an output unit 210, a receiving unit 220, a detection unit 230, an interference unit 240, a depth information generation unit 250, and a control unit 140160. Only components related to the present embodiments are illustrated in the LiDAR device 200. Accordingly, it is obvious to those skilled in the art that the LiDAR device 200 may further include other general components in addition to the components illustrated in FIG. 8.

The LiDAR device 200 may be an FMCW LiDAR. In addition, the LiDAR device 100 may use a point scanning method, and thus the intensity of light received by the detection unit 230 may be smaller than in other methods, for example, a flash method. Accordingly, an APD or an SPAD having high sensitivity may be adopted as the detection unit 230. A specific circuit configuration such as the an AFE, a TDC, or the like may vary according to which light receiving element among the APD or the SPAD is included in the detection unit 230.

The LiDAR device 200 according to the embodiment may measure a distance and speed of a detection target using the Doppler effect. When an optical signal is reflected from an object with a moving wave, a change in frequency occurs due to the Doppler effect. By detecting such a change in frequency, a speed and position of the object may be measured simultaneously without time consumption. The Doppler effect is a phenomenon in which the wavelength of an electromagnetic wave measured by an observer differs from the wavelength in a laboratory when an object emitting electromagnetic waves (light) moves toward or away from the observer. When the object emitting electromagnetic waves moves toward the observer, the wavelength of the observed electromagnetic wave is shorter, and when the object moves away from the observer, the wavelength of the observed electromagnetic wave is longer.

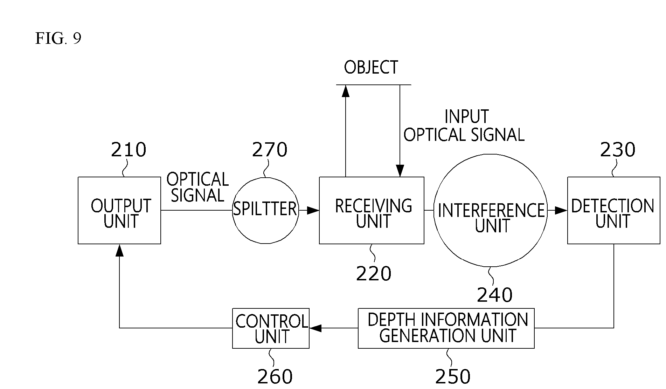

FIG. 9 is a schematic conceptual diagram of the LiDAR device according to the embodiment.

Referring to FIGS. 8 and 9, the LiDAR device 200 according to the embodiment may include the output unit 210 for outputting an optical signal, the receiving unit 220 for receiving input optical signals for a plurality of points of an object, which are reflected back from the object, the interference unit 240 for causing interference between the input optical signal and reference light and generating an interference optical signal, the detection unit 230 for detecting the input optical signal, a depth information generation unit 250 for generating depth information of the object based on the optical signal and the input optical signal, and the control unit 260 for adjusting a frequency of the optical signal. The LiDAR device 200 may include the output unit 210 for emitting the output optical signal to the object, the receiving unit 220 for receiving an input optical signal that is reflected back from the object, the detection unit 230 for detecting the input optical signal, and the control unit 240 for adjusting the frequency of the optical signal.

The output unit 210 may output the optical signal and transmit the output optical signal to the receiving unit 220.

The output unit 210 may include a light source such as an edge light emitting laser, a VCSEL, a distributed feedback laser, an LED, an SLD, or the like. The output unit 210 may generate and emit light in a plurality of different wavelength bands. The output unit 210 may generate pulsed light or continuous light.

The continuous light may be in the form of a sinusoid wave or a squared wave. By generating the output optical signal in the form of pulsed light or continuous light, the LiDAR device 200 may detect a time difference or phase difference between the output optical signal output from the output unit 210 and the input optical signal input to the receiving unit 220 after reflected from the object. In the present specification, the output optical signal may be referred to as an optical signal, and the object may be referred to as an observation target. From the perspective of the observation target, the output optical signal may be incident light.

The output unit 210 may include a light source, a lens group disposed on the light source, and a diffusion member disposed on the lens group. The light source generates and outputs light. The light generated by the light source may be infrared rays having a wavelength of 770 to 3000 nm. Alternatively, the light generated by the light source may be visible light having a wavelength of 380 to 770 nm. The light source may use LEDs and have a form in which a plurality of light emitting diodes are arranged in a predetermined pattern. In addition, the light source may include OLEDs or LDs. Alternatively, the light source may include a VCSEL. The VCSEL is one of LDs for converting an electric signal into an optical signal and may output light having a wavelength of about 800 to 1000 nm, for example, the wavelength of about 850 nm or about 940 nm. The light source repeats turning on/off at a predetermined time interval to generate an output optical signal in the form of a pulse wave or a continuous wave. The predetermined time interval may be the frequency of the output optical signal.

The lens group may condense light output from a light source and output the condensed light to the outside. The lens group may be disposed to be spaced apart from the light source above the light source. Here, the "above" of "above the light source" may refer to a side to which light is output from the light source. The lens group may include at least one lens. When the lens group includes a plurality of lenses, the lenses may be aligned based on a central axis to form an optical system. Here, the central axis may be the same as an optical axis of the optical system.

The diffusion member may receive the light output from the light source and the lens group, refract or diffract the received light, and output the refracted or diffracted light.

The optical signal output by the output unit 210 may be adjusted by the control unit 260. The output unit 210 may receive a command to adjust the output of the optical signal from the control unit 260 and control the output optical signal. The output unit 210 may output optical signals having different intensities, cycles, frequencies, and the like. The output unit 210 may transmit the output optical signal to the receiving unit 220. The output unit 210 may output an optical signal of which a frequency is modulated according to a predetermined cycle. The output unit 210 may simultaneously measure the distance and speed of the object using the Doppler effect through the optical signal of which the frequency is modulated.

The optical signal output by the output unit 210 may be split into input light and reference light by the control unit 260. For example, a splitter 270 connected between the output unit 210 and the receiving unit 220 may split the optical signal into the input light and the reference light. Here, the input light may be transmitted to the receiving unit 220, and the reference light may be transmitted to the interference unit 240. The input light received after reflected from the object may have different characteristics from the reference light, and the interference unit 240 may cause interference between the input light and the reference light and output a specific optical signal. The LiDAR device 200 may simultaneously measure the distance and speed of the object using the optical signal generated as the result of the interference.

The receiving unit 220 may emit an optical signal to an object or receive an optical signal reflected from the object. The receiving unit 220 may be referred to as a scanner.

The receiving unit 220 may include an image sensor, a filter disposed on the image sensor, and a lens group disposed on the filter. The optical signal reflected from the object may pass through the lens group. The optical axis of the lens group may be aligned with the optical axis of the image sensor. The filter may be disposed between the lens group and the image sensor. The filter may be disposed on the optical path between the object and the image sensor. Light in a predetermined wavelength range may pass the filter. Light in a specific wavelength band may pass the filter. The filter may transmit light having a specific wavelength. For example, light in an infrared band may pass the filter, and the filter may block light other than light in the infrared band. The image sensor may detect light. The image sensor may receive an optical signal. The image sensor may detect the optical signal and output the detected optical signal as an electrical signal. The image sensor may detect light having a wavelength corresponding to the wavelength of light output by the light source. For example, the image sensor may detect light in an infrared band. Here, the image sensor may correspond to the detection unit 230 of the LiDAR device 200.

The image sensor may be formed to have a structure in which a plurality of pixels are arranged in the form of a grid. The image sensor may be a CMOS image sensor or a CCD image sensor. In addition, the image sensor may include a ToF sensor for receiving IR light reflected from an object and measuring a distance using a time difference or phase difference.

The receiving unit 220 may receive the optical signal output from the output unit 210. The receiving unit 220 may emit the received optical signal to the object. The receiving unit 220 may receive an input optical signal that is reflected back from the object. In addition, the receiving unit 220 may transmit the received input optical signal to the detection unit 230. The received input optical signal may be interfered with the reference light in the interference unit 240 and provided to the detection unit 230.

The receiving unit 220 may uniformly and constantly emit an optical signal to each unit of objects divided into predetermined units.

To uniformly emit the optical signal to the object, a position of the receiving unit 220 may be moved or an angle thereof may be adjusted, but the method of emitting an optical signal is not limited thereto.

The interference unit 240 may cause interference between the incident optical signal and the reference light. Since the LiDAR device 200 according to the embodiment measures a change in the interference light between the incident optical signal and the reference light by changing the frequency of the optical signal, the interference unit 240 for causing interference may be present.

The interference unit 240 may receive the incident optical signal from the receiving unit 230. The interference unit 240 may cause interference between the received incident optical signal and the reference light. In addition, the interference light generated by interference may be transmitted to the detection unit 230.

The detection unit 230 may detect an optical signal.

The detection unit 230 may receive and detect the interference light generated by interference from the interference unit 240. The detection unit 230 may include a plurality of photodiodes, which may be light receiving elements that generate electric signals by light energy. The type of the light receiving element is not particularly limited.

The detection unit 230 may divide the object into a plurality of units and detect an input optical signal for each unit. The detection unit 230 may detect an optical signal of the object for each unit and detect input optical signals reflected from all portions of the object. The detection unit 230 may detect the input optical signal and simultaneously measure the distance and speed of the object.

The depth information generation unit 250 of the LiDAR device according to the embodiment may generate depth information using data on input optical signals for some continuous points among a plurality of points.

The depth information generation unit 250 may generate the depth information of the observation target using the interference optical signal generated by the interference unit 240. The depth information generation unit 250 may generate information about the position and speed of the object using the result of interfering light of which a frequency changes according to the FMCW method. When waves are reflected from a moving object, a frequency may be changed by the Doppler effect, and by detecting such a change in the frequency, the speed and position of the object may be measured simultaneously without time consumption. The FMCW method differs from a dToF method of measuring a round-trip time of an optical signal and an iToF method of measuring a distance using an optical signal of which an intensity changes.

The optical signal output from the output unit 210 may correspond to an optical signal of which a frequency is modulated. The reference light incident on the interference unit 240 may also correspond to the optical signal of which the frequency is modulated, and the input optical signal reflected from the object and incident on the interference unit 240 may also correspond to the optical signal of which the frequency is modulated. Here, interference between the reference light and the input light, which have different characteristics, is caused by the interference unit 240. That is, the Doppler effect occurs between different optical signals. As a result, the interference light output from the interference unit 240 has characteristics. The detection unit 230 may detect interference light, and the depth information generation unit 250 may measure the speed and position of the object in real time using the information about the detected interference light.

The control unit of the LiDAR device according to the embodiment may be set to modulate the waveform of the frequency of the optical signal.

The control unit 260 may adjust the optical signal output by the output unit 210. The control unit 260 controls driving of the output unit 210, the receiving unit 220, and the depth information generation unit 250. The depth information generation unit 250 and the control unit 260 may be implemented in the form of a printed circuit board (PCB). In addition, the depth information generation unit 250 and the control unit 260 may be implemented in the form of a different configuration. Alternatively, the control unit 260 may be included in a terminal or a vehicle in which the LiDAR device 200 according to the embodiment of the present invention is disposed. For example, the control unit 260 may be implemented in the form of an application processor (AP) of a smartphone provided with the LiDAR device 200 according to the embodiment of the present invention or implemented in the form of an electronic control unit (ECU) of a vehicle provided with the LiDAR device 200 according to the embodiment of the present invention.

The control unit 260 may transmit a command to adjust an output optical signal to the output unit 210. The control unit 260 may transmit a command to adjust the output intensity, cycle, frequency, or the like of the optical signal. The control unit 260 may receive detection data of the input optical signal from the detection unit. The control unit 260 may transmit a command to adjust the optical signal according to the corresponding data to the output unit 210.

The control unit 260 may transmit a command to adjust a magnitude of the frequency of the optical signal. In addition, the change in the frequency of the optical signal may be adjusted to have a constant waveform, and the shape, cycle, or the like of the corresponding waveform may be adjusted.

The LiDAR device 200 may generally be composed of components such as a laser, a scanner, and a photodiode. Each component may have any form. Various optical components may be present between the laser and the scanner, the scanner and the observation target, and the scanner and the photodiode. A frequency of the laser may be modulated. The optical signal of the laser may be split to incident light and reference light through the splitter 270. The incident light may move to the observation target through the scanner and then may be reflected back from the observation target. The reflected light reflected back from the observation target may be attenuated by the amount of loss. The reflected light reflected back from the observation target and the reference light may interfere to generate a beat frequency. The distance and speed to the observation target may be measured based on such a beat frequency.

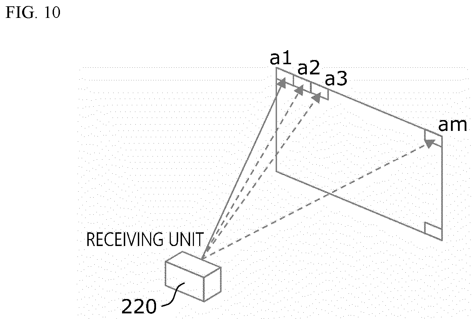

FIG. 10 is an image illustrating an object dividing method of the LiDAR device according to the embodiment.

Referring to FIG. 10, the LiDAR device according to the embodiment may be a scanning type LiDAR. The LiDAR device according to the embodiment may detect input optical signals for a plurality of points of an object. In addition, the depth information generation unit of the LiDAR device according to the embodiment may generate depth information using data on input optical signals for some continuous points among the plurality of points.

The point may be a unit for an object, which will be detected by the LiDAR device, divided into regular units. The point may be a unit for a part of the object, which will be observed, divided into regular areas and shapes. In addition, the detection unit may detect an input optical signal for each point. In addition, the depth information generation unit may generate depth information using data on input optical signals for some continuous points among the plurality of points.

The receiving unit 220 may emit an optical signal to an object and transmit the reflected incident optical signal to the detection unit. The receiving unit 220 may sequentially emit an optical signal to a1, a2, a3, ..., and am using a method of adjusting an emission position of the optical signal or adjusting the angle thereof. The depth information generation unit may generate depth information using data on an incident optical signal of the corresponding point for each divided point. The size of the divided point is not limited.

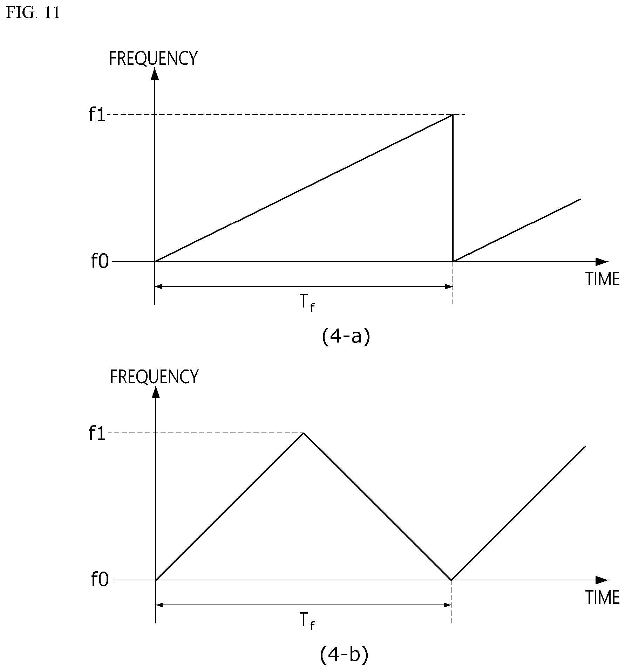

FIG. 11 is a graph illustrating waveforms of frequencies of an optical signal of the LiDAR device according to the embodiment.

The frequency of the optical signal of the LiDAR device according to the embodiment may represent a sawtooth waveform (11-a).

The frequency of the optical signal of the LiDAR device according to the embodiment may represent a triangular waveform (11-b).

The frequency of the optical signal according to the embodiment may change constantly over time within a range of $f_0$ to $f_1$ and represent a waveform having a predetermined cycle $T_f$. However, the waveform of the frequency of the optical signal is not limited thereto.

In the case of the triangular waveform, a distance resolution of the LiDAR device may be determined according to Equation 7.

[Equation 7]

$$\Delta R = \frac{cT_f}{4(f_1 - f_0)} \cdot \frac{1}{T_p}$$

Here, $\Delta R$ denotes a distance resolution, c denotes a speed of an optical signal, $f_1 - f_0$ denotes a width of a frequency of the optical signal, $T_f$ denotes a cycle of one waveform, and $T_p$ denotes an exposure time of one point of the depth information generation unit. (In the case of the sawtooth waveform, Equation 1 may use 2 instead of 4).

The distance resolution refers to a minimum measurable distance between two points represented by plane distance units. As the distance resolution is low, the performance of the LiDAR device is improved.

In the case of the triangular waveform, a maximum measurable distance of the LiDAR device may be determined according to Equation 8.

[Equation 8]

$$R_{max} = \frac{f_s c T_f}{8(f_1 - f_0)}$$

Here, $R_{max}$ denotes the maximum measurable distance, $f_1 - f_0$ denotes the frequency width of the optical signal, $f_s$ denotes a sampling frequency, c denotes the speed of the optical signal, and $T_f$ denotes the cycle of the waveform. (In the case of the sawtooth waveform, Equation 8 may use 4 instead of 8).

The maximum measurable distance refers to a maximum distance at which the LiDAR device may detect an object. As the maximum measurable distance increases, the performance of the LiDAR device is improved.

In the case of the triangular waveform, a frequency modulation rate of the LiDAR device may be determined according to Equation 9.

[Equation 9]

$$V_f = 2\frac{f_1 - f_0}{T_f}$$

Here, $V_f$ denotes a frequency modulation rate, $f_1$-$f_0$ denotes the frequency width of the optical signal, and $T_f$ denotes the cycle of the waveform (In the case of the sawtooth waveform, Equation 3 may use 4 instead of 2).

The frequency modulation rate is a rate at which the LiDAR device may modulate the frequency of the output optical signal. As the frequency modulation rate decreases, the performance of the LiDAR device is improved.

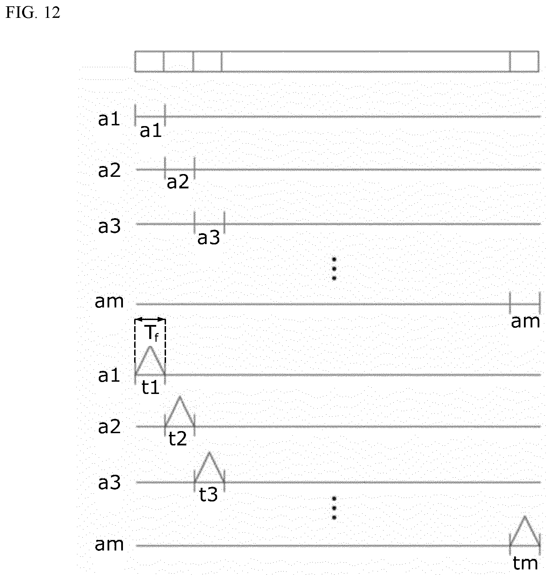

FIG. 12 is an image illustrating a detecting method of a conventional LiDAR device.

Referring to FIGS. 11 and 12, the depth information generation unit may generate depth information using data on input optical signals of the points a1, a2, ..., and am of the object. The receiving unit may emit an optical signal having a frequency with a predetermined waveform and cycle toward the object. The receiving unit may emit the optical signal having the frequency with the predetermined waveform and cycle to the object and receive the reflected input optical signal. The receiving unit may emit the constant optical signal to the object by adjusting the emission position of the optical signal or adjusting the angle thereof.

The cycle of the waveform of the frequency of the optical signal may be constant as $T_f$.

Exposure times of the points a1, a2, a3, ..., and am of the depth information generation unit may be constant as t1, t2, t3, ..., and tm, respectively. In this case, the exposure time tm may be equal to the cycle $T_f$ of the waveform of the frequency of the optical signal.

A distance resolution of the conventional LiDAR device may be determined according to Equation 10.

[Equation 10]

$$\Delta R = \frac{cT_f}{4(f_1 - f_0)} \cdot \frac{1}{T_p} = \frac{cT_f}{4(f_1 - f_0)} \cdot \frac{1}{t_m} = \frac{c}{4(f_1 - f_0)}$$

A maximum measurable distance of the conventional LiDAR device may be determined according to Equation 11.

[Equation 11]

$$R_{max} = \frac{f_s c T_f}{8(f_1 - f_0)}$$

A frequency modulation rate of the conventional LiDAR device may be determined according to Equation 12.

[Equation 12]

$$V_f = 2\frac{f_1 - f_0}{T_f}$$

In the conventional LiDAR device, the depth information generation unit may generate depth information and speed information of the point of the object using the input optical signal reflected from the point of the object. That is, the depth information generation unit may generate the depth information and speed information of the point of the object using the input optical signal corresponding to one cycle. Specifically, the LiDAR device may generate depth information and speed information of a point of the corresponding object from interference light generated as the result of interfering the input optical signal reflected from the point of the object with the reference optical signal. Hereinafter, a method of detecting depth information and speed information of the LiDAR device 200 according to an embodiment will be described.

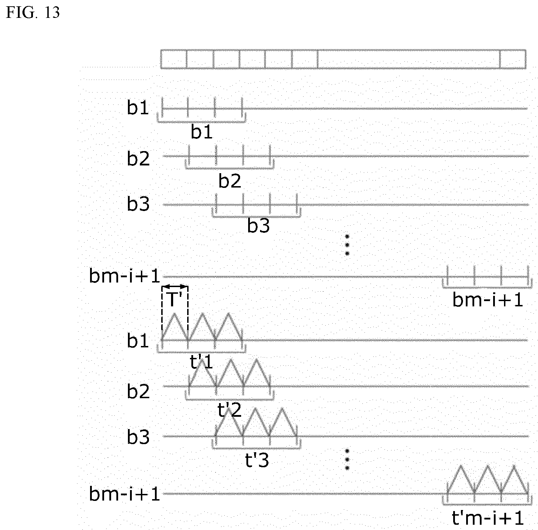

FIG. 13 is an image illustrating a detecting method of the LiDAR device according to the embodiment.

Referring to FIGS. 12 and 13, the depth information generation unit of the LiDAR device according to the embodiment may generate depth information of a first pixel using first to $i^{th}$ data on input optical signals of first to $i^{th}$ points. Here, the pixel may correspond to a different unit from the above point. For example, the number of pixels may be less than the number of points.

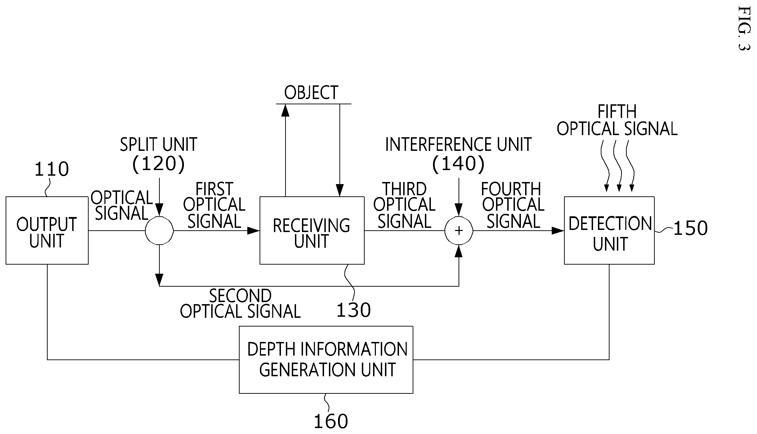

The detection unit may detect the incident optical signal of each point of the object in the same manner as the conventional LiDAR device. That is, the detection unit may detect the interference optical signal generated by interfering incident optical signals reflected from first to $m^{th}$ points with the reference optical signal. The corresponding operation is the same as the operation of the detection unit described with reference to FIGS. 1 to 5.

The depth information generation unit may generate depth information using pieces of data for input optical signals of a plurality of points with pixels b1, b2, b3, ..., and b(m-i+1) as new units (i is an integer greater than or equal to 1, and m is an integer greater than or equal to i). For example, referring to FIG. 13, when i is 3, the depth information generation unit may generate the depth information of the first pixel using first to third data for input optical signals of three points of first to third points.

The plurality of points and data of the LiDAR device according to the embodiment are m in total, and depth information per pixel may be generated using i data.

The depth information generation unit of the LiDAR device according to the embodiment may generate depth information of a second pixel using second to $(i+1)^{th}$ data for input optical signals of second to $(i+1)^{th}$ points.

Like generating the depth information of the first pixel using the data for the input optical signals of the first to $i^{th}$ points, the depth information generation unit may generate the depth information of the second pixel using the second to $(i+1)^{th}$ data for the input optical signals of the second to $(i+1)^{th}$ points. For example, when i is 3, the depth information generation unit may generate the depth information of the second pixel using second to fourth data for input optical signals of three points of second to fourth points.

The depth information generation unit of the LiDAR device according to the embodiment may generate depth information from the second pixel to an $(m-i+1)^{th}$ pixel using $(m-i+1)^{th}$ to $m^{th}$ data for the input optical signals of $(m-i+1)^{th}$ to $m^{th}$ points.

Like generating the depth information of the second pixel using the data for the input optical signals of the second to $(i+1)^{th}$ points, the depth information generation unit may generate the depth information from the third pixel to the $(m-i+1)^{th}$ pixel using the $(m-i+1)^{th}$ to $m^{th}$ data for the input optical signals of the $(m-i+1)^{th}$ to $m^{th}$ points. For example, when i is 3 and m is 100, the depth information generation unit may generate depth information up to a $98^{th}$ pixel using $98^{th}$ to $100^{th}$ data for input optical signals of $98^{th}$ to $100^{th}$ points.

The depth information generation unit of the LiDAR device according to the embodiment may repeat a process of generating the depth information of the first to $(m-i+1)^{th}$ pixels.

The cycle of the waveform of the frequency of the optical signal of the LiDAR device according to the embodiment may be the same as the exposure time of one point, and the exposure time of one pixel may be i times the exposure time of the input optical signal of one point.

Referring to FIGS. 12 and 13, a cycle T' of the waveform of the frequency of the optical signal according to the embodiment may be the same as the cycle $T_f$ of the waveform of the frequency of the optical signal of the conventional LiDAR device (T'=$T_f$). In addition, the cycle T' of the waveform of the frequency of the optical signal may be the same as the exposure time t1, t2, ..., or tm of one point, and an exposure time t'1, t'2, t'3, ..., or t'(m-i+1)) of one pixel may be i times the exposure time t1, t2, ..., or tm of the input optical signal of one point.

The distance resolution of the LiDAR device according to the embodiment may be 1/i times the distance resolution when the depth information generation unit generates the depth information with the plurality of points.

The distance resolution of the LiDAR device according to the embodiment may be determined according to Equation 13.

[Equation 13]

$$\Delta R' = \frac{cT'}{4(f_1 - f_0)} \cdot \frac{1}{it_{m-i+1}} = \frac{cT_f}{4(f_1 - f_0)} \cdot \frac{1}{iT_f} = \frac{1}{i}\Delta R$$

($\Delta$R' denotes the distance resolution of the LiDAR device according to the embodiment).

Accordingly, according to Equation 7, the distance resolution of the LiDAR device according to the embodiment may be 1/i times the distance resolution when the conventional depth information generation unit generates the depth information with the plurality of points. For example, referring to FIG. 6, since t'm is 3 times tm, the distance resolution of the LiDAR device according to the embodiment may be 1/3 times the distance resolution of the conventional LiDAR device.

When the time for which one unit is detected increases, the distance resolution may decrease, thereby improving the performance of the LiDAR device.

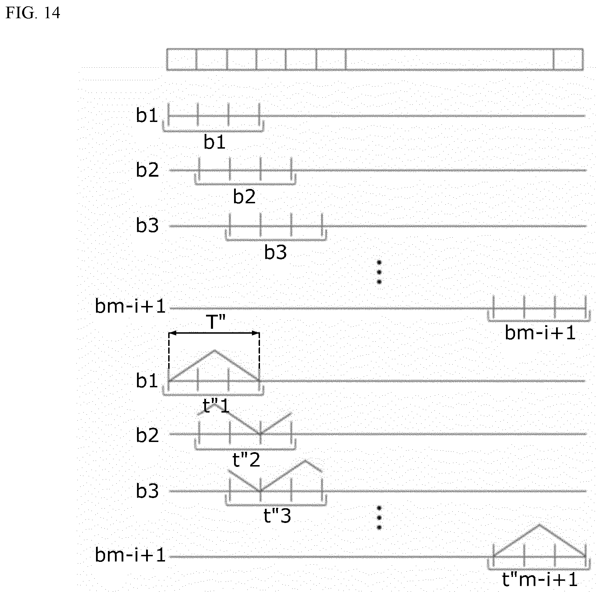

FIG. 14 is an image illustrating a detecting method of a LiDAR device according to another embodiment.

Referring to FIGS. 12 and 14, the control unit of the LiDAR device according to the embodiment may increase the cycle of the waveform of the frequency of the optical signal as much as j times. At the same time, as described with reference to FIG. 6, the depth information generation unit of the LiDAR device may generate the depth information of the first pixel using the first to $i^{th}$ data for the input optical signals of the first to $i^{th}$ points.

A cycle T" of the waveform of the frequency of the optical signal according to the embodiment may be i times the cycle of the waveform of the frequency of the optical signal of the conventional LiDAR device. For example, referring to FIGS. 5 and 7, the cycle T" of the waveform of the frequency of the optical signal according to the embodiment may be 3 times the cycle $T_f$ of the waveform of the frequency of the optical signal of the conventional LiDAR device.

The cycle of the waveform of the frequency of the optical signal of the LiDAR device according to the embodiment may be the same as the exposure time of one point, and the exposure time of one pixel may be the same as the exposure time of the input optical signal of one point.

The cycle T" of the waveform of the frequency of the optical signal may be i times the exposure time required to generate the depth information of the input optical signal with one point, and the exposure time t"1, t"2, t"3, ..., or t"(m-i+1)) required to generate the depth information of the input optical signal with one pixel b1, b2, b3, ..., or b(m-i+1)) may be the same as the exposure time required to generate the depth information of the input optical signal with one point.

The maximum measurement distance of the LiDAR device according to the embodiment may be i times the maximum measurement distance when the depth information generation unit generates the depth information with a plurality of points.

The maximum measurement distance of the LiDAR device according to the embodiment may be determined according to Equation 14.

[Equation 14]

$$R_{max}'' = \frac{f_s c T''}{8(f_1 - f_0)} = \frac{f_s c i T_f}{8(f_1 - f_2)} = i R_{max}$$

($R_{max}$" denotes the maximum measurement distance of the LiDAR device according to the embodiment).

The cycle of the waveform of the frequency of the optical signal according to the embodiment is T" and may be i times the cycle of the waveform of the frequency of the optical signal of the LiDAR device when the depth information is generated according to the conventional points. For example, referring to FIGS. 12 and 14, since T" is 3 times $T_f$, the maximum measurement distance of the LiDAR device according to the embodiment may be 3 times the maximum measurement distance of the conventional LiDAR device.

When the cycle of the waveform of the frequency of the optical signal increases, the maximum measurement distance may increase, thereby improving the performance of the LiDAR device.

The frequency modulation rate of the LiDAR device according to the embodiment may be 1/i times the frequency modulation speed when the depth information generation unit generates the depth information with the plurality of points.

The frequency modulation rate of the LiDAR device according to the embodiment may be determined according to Equation 15.

[Equation 15]

$$V_f'' = 2\frac{f_1 - f_0}{T''} = 2\frac{f_1 - f_0}{i T_f} = \frac{1}{i} V_f$$

($V_f$" denotes the frequency modulation rate of the LiDAR device according to the embodiment).

The frequency modulation rate may be determined by Equation 15. The cycle of the waveform of the frequency of the optical signal according to the embodiment is T" and may be i times the cycle of the waveform of the frequency of the optical signal of the LiDAR device when the depth information is generated according to the conventional points. For example, referring to FIGS. 12 and 14, since T" is 3 times $T_f$, the maximum measurement distance of the LiDAR device according to the embodiment may be 1/3 times the maximum measurement distance of the conventional LiDAR device.

When the cycle of the waveform of the frequency of the optical signal increases, the frequency modulation speed may decrease, thereby improving the performance of the LiDAR device.

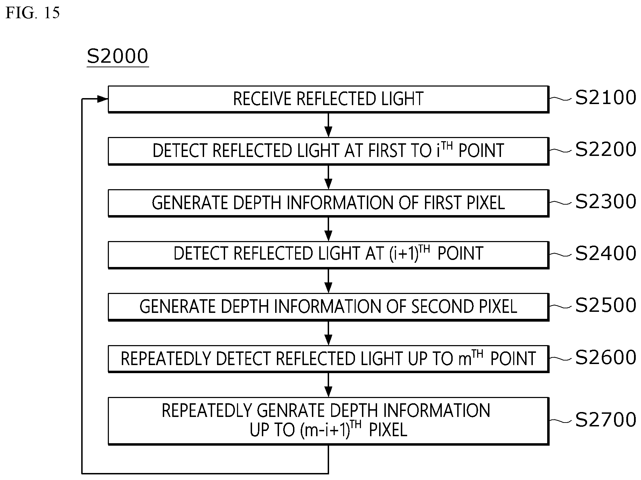

FIG. 15 is a flowchart of a LiDAR operation method according to an embodiment.

Referring to FIG. 15, a LiDAR operation method S2000 according to the embodiment may include receiving, by a receiving unit, reflected light reflected from a plurality of points of an object (S2100), detecting, by a detection unit, reflected light reflected from first to $i^{th}$ points (S2200), and generating, by a depth information generation unit, depth information of a first pixel using first to $i^{th}$ data generated by detecting the reflected light reflected from first to $i^{th}$ points (S2300) (i is an integer greater than or equal to 1).

The LiDAR operation method S2000 according to the embodiment may include detecting, by the detection unit, reflected light reflected from an $(i+1)^{th}$ point (S2400), and generating, by the depth information generation unit, depth information of a second pixel using second to $(i+1)^{th}$ data generated by detecting the reflected light reflected from second to $(i+1)^{th}$ points (S2500).

The LiDAR operation method S2000 according to the embodiment may include repeatedly detecting, by the detection unit, reflected light reflected from an $m^{th}$ point (S2600), and repeatedly generating, by the depth information generation unit, depth information up to an $(m-i+1)^{th}$ pixel using $(m-i+1)^{th}$ to $m^{th}$ data generated by detecting the reflected light reflected from the $(m-i+1)^{th}$ to m points (S2700) (m is an integer greater than or equal to i).

The LiDAR device 200 may generate pieces of data in real time and generate depth information of each pixel using the pieces of generated data, thereby reducing a calculation time of the depth information.

The depth information generation unit of the LiDAR operation method according to the embodiment may repeat the process of generating the depth information of the first to $(m-i+1)^{th}$ pixels.

The cycle of the waveform of the frequency of the optical signal of the LiDAR operation method according to the embodiment may be the same as the exposure time of one point, and the exposure time of one pixel may be i times the exposure time of the input optical signal of one point.

The LiDAR operation method according to the embodiment may include increasing, by a control unit, the cycle of the waveform of the frequency of the optical signal as much as j times.

The cycle of the waveform of the frequency of the optical signal of the LiDAR operation method according to the embodiment may be the same as the exposure time of one point, and the exposure time of one pixel may be the same as the exposure time of the input optical signal of one point.

The LiDAR device according to the embodiment may include an optical output device (VCSEL) for outputting an optical signal, a plurality of lens groups for condensing the optical signal and outputting the condensed optical signal to the outside, an optical detection device (SPAD) for detecting the input optical signals that are reflected back from a plurality of points of an observation target, and a depth information generation unit for generating depth information of the observation target based on the optical signal and the input optical signal, in which the depth information generation unit may generate the depth information using data on input optical signals for some continuous points among a plurality of points.

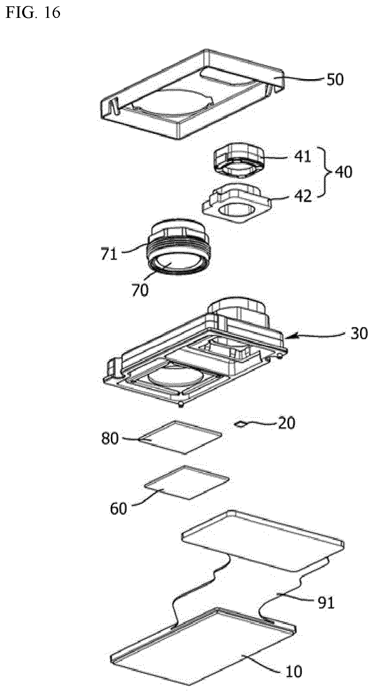

FIG. 16 is an exploded view of the LiDAR device according to the embodiment of the present invention.

The LiDAR device may include an output unit and a receiving unit. However, since components such as a substrate 10, a holder 30, a shield can 50, and the like are formed integrally and used in common for the output unit and the receiving unit, it may be difficult to distinguish the output unit from the receiving unit. In this case, each of the above components can be understood as a component of each of the output unit and the receiving unit. However, as a modified example, the common components of the substrate 10, the holder 30, and the shield can 50 may be provided separately to each of the output unit and the receiving unit.

The output unit may include the substrate 10, a light source 20, the holder 30, a diffusion member 41, a diffuser ring 42, and the shield can 50. The receiving unit may include the substrate 10, a sensor 60, a filter 80, the holder 30, a lens 70, a barrel 71, and the shield can 50.

The substrate 10 may include a printed circuit board (PCB). The substrate 10 may be connected to a connector through a flexible PCB (FPCB) 91. The substrate 10 and the FPCB 91 may be formed as a rigid FPCB (RFPCB). The light source 20 and the sensor 60 may be disposed on the substrate 10. The substrate 10 may be disposed under the holder 30. The substrate 10 may include a terminal. The terminal of the substrate 10 may be coupled to a coupling portion of the shield can 50. The terminal of the substrate 10 may include a plurality of terminals. The terminal of the substrate 10 may include two terminals.

The light source 20 may be disposed on the substrate 10. The light source 20 may be disposed in contact with the substrate 10. The light source 20 may be disposed above the substrate 10. The light source 20 may be disposed on the substrate 10. The light source 20 may correspond to the output unit 210.

The holder 30 may be disposed on the substrate 10. The holder 30 may be disposed in contact with the substrate 10. The holder 30 may be disposed above the substrate 10. The holder 30 may be disposed on the substrate 10. The holder 30 may be fixed to the substrate 10 by an adhesive. The holder 30 may accommodate the light source 20, the diffuser module 40, the sensor 60, and the filter 80 therein. The holder 30 may be an injection-molded plastic product. The holder 30 may be formed by injection molding.

The diffuser module 40 may include a diffusion member 41 and a diffuser ring 42. The diffuser module 40 may be formed integrally as in the modified example, but in the present embodiment, the diffuser module 40 may be manufactured separately as the diffusion member 41 and the diffuser ring 42 to increase moldability during injection molding. The diffusion member 41 and the diffuser ring 42 may be separated.

The diffusion member 41 may be a diffuser lens. The diffusion member 41 may be disposed in the holder 30. The diffusion member 41 may be coupled to the holder 30. The diffusion member 41 may be fixed to the holder 30. The diffusion member 41 may be disposed on an optical path of light emitted from the light source 20. The diffusion member 41 may be disposed on the light source 20. The diffusion member 41 may be disposed above the light source 20. The diffusion member 41 may be an injection-molded plastic product. The diffusion member 41 may be formed by plastic injection molding. A height of an upper end of the diffusion member 41 may correspond to a height of an upper end of the lens 70. The diffusion member 41 may be inserted upward in a vertical direction and coupled to the holder 30. In this case, "upward" may refer to a direction from a lower portion of the holder 30 to an upper portion of the holder 30. A part of the diffusion member 41 may overlap the holder 30 upward.

The diffuser ring 42 may be disposed in the holder 30. The diffuser ring 42 may be fixed to the holder 30. The diffuser ring 42 may be coupled to the holder 30. The diffuser ring 42 may be disposed under the diffusion member 41. The diffuser ring 42 may support the diffusion member 41. The diffuser ring 42 may be in contact with the diffusion member 41. The diffuser ring 42 may be an injection-molded plastic product. The diffuser ring 42 may be formed by plastic injection molding.

The shield can 50 may cover a body portion of the holder 30. The shield can 50 may include a cover. The shield can 50 may include a cover can. The shield can 50 may be a non-magnet. The shield can 50 may be formed of a metallic material. The shield can 50 may be formed of a metal plate. The shield can 50 may be electrically connected to the substrate 10. The shield can 50 may be connected to the substrate 10 through solder balls. Accordingly, the shield can 50 may be grounded. The shield can 50 may block electromagnetic interference (EMI). In this case, the shield can 50 may be referred to as an "EMI shield can." In the present embodiment, since a high voltage is used inside the optical device, EMI noise may increase, and the shield can 50 may block the EMI noise.

The sensor 60 may be disposed on the substrate 10. The sensor 60 may be disposed at the other side of a partition of the holder 30 on the substrate 10. That is, the sensor 60 may be disposed at a side opposite to the light source 20 with respect to the partition of the holder 30. The sensor 60 may detect infrared rays. The sensor 60 may detect light of a specific wavelength among the infrared rays. The sensor 60 may detect light passing through the filter 80. The sensor 60 may detect light in the wavelength band of the light source 20. Accordingly, the sensor 60 may detect light emitted from the light source 20 and reflected in a subject to detect three-dimensional image information of the subject. An effective sensing area of the sensor 60 may be disposed to correspond to the diffusion member 41, but the sensor 60 may be disposed to be biased entirely toward the partition. A circuit pattern of the sensor 60 and the like may be disposed on a portion of the sensor 60, which is biased toward the partition.

The lens 70 may be fixed in the barrel 71. The lens 70 may be an injection-molded plastic product. The lens 70 may be formed by plastic injection molding. The lens 70 may include a plurality of lenses.

The filter 80 may be disposed between the lens 70 and the sensor 60. The filter 80 may be a band pass filter through which light in a specific wavelength passes. The filter 80 may allow infrared rays to pass therethrough. The filter 80 may allow the light in the specific wavelength among the infrared rays to pass therethrough. The filter 80 may allow light in a wavelength band of light emitted by the light source 20 to pass therethrough. The filter 80 may block visible light. The filter 80 may be coupled to the holder 30. A groove having the size corresponding to the filter 80 may be formed in the holder 30, and the filter 80 may be inserted into the groove and fixed using an adhesive. An adhesive injection groove through which an adhesive is injected between the filter 80 and the holder 30 may also be formed in the groove of the holder 30. The filter 80 may be disposed at a position lower than a position of the diffuser ring 42.

Although the LiDAR device for extracting depth information using a ToF method has been mainly described above, embodiments of the present invention are not limited thereto. The LiDAR device according to the embodiment of the present invention may be a LiDAR device for extracting depth information using a structured light method. That is, the LiDAR device according to the embodiment of the present invention may use structured light having a predetermined pattern as an output optical signal and generate depth information using the disparity of the structured light.

The operation method according to the disclosed embodiment may be implemented in the form of program commands that may be performed through various computer devices and recorded on a computer-readable medium. In addition, the embodiments of the present disclosure may be a computer-readable recording medium in which one or more programs including commands that execute a wireless communication method are recorded.

In addition, the computer-readable medium may include program commands, data files, data structures, or the like alone or in combination. The program commands recorded on the medium may be specially designed and constructed for the present disclosure or may be known and available to those skilled in the art of computer software. Examples of the computer-readable recording medium include magnetic media such as a hard disk, a floppy disk, and a magnetic tape, optical media such as a compact disc read only memory (CD-ROM) and a digital video disc (DVD), and magneto-optical media such as a floptical disk, and hardware devices specifically configured to store and execute program commands, such as a read only memory (ROM), a random access memory (RAM), and a flash memory. Examples of the program commands include not only machine language code such as that produced by a compiler, but also high-level language code that may be executed by a computer using an interpreter or the like.

Here, a device-readable storage medium may be provided in the form of a non-transitory storage medium. Here, "non-transitory" is a tangible device and only means not including a signal (e.g., electromagnetic waves), and this term does not distinguish between cases in which data is stored semi-permanently and temporarily in the storage medium. For example, "non-temporary storage medium" may include a buffer in which data is temporarily stored.

According to one embodiment, the operation method according to various embodiments disclosed herein may be provided by being included in a computer program product. The computer program product may be traded as a product. The computer program product may be distributed in the form of a device-readable storage medium (e.g., CD-ROM) or distributed online (e.g., downloading or uploading) via an application store (e.g., Play Store™) or directly between two user devices (e.g., smartphones). In the case of the online distribution, at least some of the computer program products (e.g., a downloadable app) may be at least temporarily stored or temporarily generated in a device-readable storage medium such as a memory of a server of a manufacturer, a server of an application store, or a relay server.

Specifically, the computer program product may be implemented by including a recording medium in which a program that performs the operation method according to the disclosed embodiment is stored.

The term "unit" used in the present embodiment means a software or hardware component such as field programmable gate array (FPGA) or an application specific integrated circuit (ASIC), and the "unit" performs certain roles. However, the "unit" is not limited to software or hardware. The "unit" may be disposed in an addressable storage medium and configured to reproduce one or more processors. Accordingly, as an example, the "unit" includes components such as software components, object-oriented software components, class components, and task components, processes, functions, attributes, procedures, subroutines, segments of program code, drivers, firmware, microcode, circuits, data, database, data structures, tables, arrays, and variables. Functions provided in the components and "units" may be combined into the smaller number of components and "unit" or separated into additional components and "units." Additionally, the components and "units" may be implemented to reproduce one or more CPUs in a device or a security multimedia card.

Although embodiments have been mainly described above, these are only illustrative and do not limit the present invention, and those skilled in the art to which the present invention pertains can know that various modifications and applications that are not exemplified above are possible without departing from the essential characteristics of the embodiments. For example, each component specifically shown in the embodiments may be implemented by modification. In addition, differences related to these modifications and applications should be construed as being included in the scope of the present invention defined in the appended claims.

**Claims**

1. A LiDAR device comprising:

    an output unit configured to output an optical signal;
    a split unit configured to split the optical signal into a first optical signal and a second optical signal;
    a receiving unit configured to receive a third optical signal, which is reflected light of the first optical signal from an object;
    an interference unit configured to cause interference between the second optical signal and the third optical signal;
    a detection unit configured to detect a fourth optical signal, which is interference light generated by the interference between the second optical signal and the third optical signal, or a fifth optical signal, which is noise; and
    a depth information generation unit configured to generate depth information and speed information of an observation target based on the optical signal,
    wherein the split unit adjusts a split ratio of the first optical signal and the second optical signal.

2. The LiDAR device of claim 1, wherein the split ratio is based on Equations 1, 2, and 3,

[Equation 1]

$$P0 = P1 + P2$$

[Equation 2]

$$P1 = (1 - x)\ P0$$

[Equation 3]

$$P2 = xP0$$

(P0 denotes power of the optical signal, P1 denotes power of the first optical signal, P2 denotes power of the second optical signal, and x denotes a variable of 0 or more and 1 or less).

3. The LiDAR device of claim 2, wherein the split unit adjusts the split ratio so that a ratio of power of the fourth optical signal to power of the fifth optical signal is present within a predetermined range.

4. The LiDAR device of claim 3, wherein the ratio of the power of the fourth optical signal to the power of the fifth optical signal is based on Equation 4,

[Equation 4]

$$\mathrm{SNR} = \frac{4R^2 x(1-x)LossP_0^2}{2eBRxP_O + 2eBR(1-x)LossP_0 + <i_{others}^2>}.$$

5. The LiDAR device of claim 4, wherein the split ratio is determined by the x in which the ratio of the power of the fourth optical signal to the power of the fifth optical signal according to Equation 4 is maximum.

6. The LiDAR device of claim 3, wherein the split unit adjusts the split ratio according to a change in the fifth optical signal.

7. The LiDAR device of claim 6, wherein the split unit increases the x when the power of the fifth optical signal increases and decreases the x when the power of the fifth optical signal decreases.

8. The LiDAR device of claim 6, wherein the detection unit detects the change in the fifth optical signal in real time, and the split unit automatically adjusts the split ratio according to the change in the fifth optical signal detected in real time.

9. The LiDAR device of claim 1, wherein the split unit includes a first split unit and a second split unit,

the optical signal sequentially passes through the first split unit and the second split unit, and
the first split unit is rotated to adjust a polarization angle of the optical signal, and the second split unit allows vertically polarized light of the optical signal passing through the first split unit to pass therethrough and reflects horizontally polarized light thereof to adjust the split ratio.

10. The LiDAR device of claim 9, wherein the first split unit is a half wave plate (HWP), and the second split unit is a polarizing beam splitter (PBS).

FIG. 1

<u>100</u>

| | |
|---|---|
| OUTPUT UNIT | 110 |
| SPLIT UNIT | 120 |
| RECEIVING UNIT | 130 |
| INTERFERENCE UNIT | 140 |
| DETECTION UNIT | 150 |
| DEPTH INFORMATION GENERATION UNIT | 160 |

FIG. 2

FIG. 3

FIG. 4

FIG. 5

FIG. 6

FIRST SPLIT UNIT
(121)

SECOND SPLIT UNIT
(122)

OPTICAL
SIGNAL

FIRST
OPTICAL SIGNAL

1-X

X

SECOND
OPTICAL SIGNAL

FIG. 7

<u>S1000</u>

| | |
|---|---|
| CHECK | ～S1100 |
| ↓ | |
| MEASURE | ～S1200 |
| ↓ | |
| ADJUST | ～S1300 |
| ↓ | |
| GENERATE | ～S1400 |

FIG. 8

<u>200</u>

| | |
|---|---|
| OUTPUT UNIT | ～210 |
| RECEIVING UNIT | ～220 |
| DETECTION UNIT | ～230 |
| INTERFERENCE UNIT | ～240 |
| DEPTH INFORMATION GENERATION UNIT | ～250 |
| CONTROL UNIT | ～260 |

FIG. 9

FIG. 10

FIG. 11

(4-a)

(4-b)

FIG. 12

FIG. 13

FIG. 14

FIG. 15

S2000

| | |
|---|---|
| RECEIVE REFLECTED LIGHT | S2100 |
| DETECT REFLECTED LIGHT AT FIRST TO $i^{TH}$ POINT | S2200 |
| GENERATE DEPTH INFORMATION OF FIRST PIXEL | S2300 |
| DETECT REFLECTED LIGHT AT $(i+1)^{TH}$ POINT | S2400 |
| GENERATE DEPTH INFORMATION OF SECOND PIXEL | S2500 |
| REPEATEDLY DETECT REFLECTED LIGHT UP TO $m^{TH}$ POINT | S2600 |
| REPEATEDLY GENRATE DEPTH INFORMATION UP TO $(m-i+1)^{TH}$ PIXEL | S2700 |

FIG. 16

## INTERNATIONAL SEARCH REPORT

| International application No. |
| --- |
| **PCT/KR2023/015096** |

### A. CLASSIFICATION OF SUBJECT MATTER

**G01S 17/894**(2020.01)i; **G01S 7/484**(2006.01)i; **G01S 7/4911**(2020.01)i; **G01S 7/4861**(2020.01)i; **G01S 7/4913**(2020.01)i; **G01S 7/4912**(2020.01)i; **G02B 26/00**(2006.01)i; **G02B 27/10**(2006.01)i; **G01S 17/931**(2020.01)i

According to International Patent Classification (IPC) or to both national classification and IPC

### B. FIELDS SEARCHED

Minimum documentation searched (classification system followed by classification symbols)

G01S 17/894(2020.01); G01B 11/00(2006.01); G01S 17/08(2006.01); G01S 17/10(2006.01); G01S 17/58(2006.01); G01S 7/481(2006.01); H01S 3/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(LiDAR), 광 분배기(optical splitter), 간섭(coherence), 강도 비율(power ratio), 편광(polarization)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0108469 A (NIPPON STEEL CORPORATION) 02 September 2021 (2021-09-02)<br>See paragraphs [0028]-[0040] and figure 1. | 1-2 |
| A | | 3-10 |
| Y | JP 2001-108747 A (MINOLTA CO., LTD.) 20 April 2001 (2001-04-20)<br>See paragraph [0021] and figures 1-2. | 1-2 |
| A | KR 10-2018-0083983 A (KOREA ADVANCED INSTITUTE OF SCIENCE AND TECHNOLOGY) 24 July 2018 (2018-07-24)<br>See paragraph [0090] and figure 7. | 1-10 |
| A | JP 2014-185956 A (AISIN SEIKI CO., LTD.) 02 October 2014 (2014-10-02)<br>See paragraphs [0019]-[0029] and figure 1. | 1-10 |

☑ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 January 2024** | **04 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/015096** |

| C. | DOCUMENTS CONSIDERED TO BE RELEVANT | |
|---|---|---|
| Category* | Citation of document, with indication, where appropriate, of the relevant passages | Relevant to claim No. |
| A | JP 2022-101264 A (TOPCON CORP.) 06 July 2022 (2022-07-06)<br>See paragraphs [0011]-[0023] and figure 1. | 1-10 |

Form PCT/ISA/210 (second sheet) (July 2022)

## INTERNATIONAL SEARCH REPORT
### Information on patent family members

International application No.

**PCT/KR2023/015096**

| Patent document cited in search report | | | Publication date (day/month/year) | Patent family member(s) | | | Publication date (day/month/year) |
|---|---|---|---|---|---|---|---|
| KR | 10-2021-0108469 | A | 02 September 2021 | CN | 113287038 | A | 20 August 2021 |
| | | | | EP | 3916429 | A1 | 01 December 2021 |
| | | | | JP | 2020-106508 | A | 09 July 2020 |
| | | | | JP | 2020-169876 | A | 15 October 2020 |
| | | | | JP | 6750767 | B1 | 02 September 2020 |
| | | | | JP | 7107234 | B2 | 27 July 2022 |
| | | | | JP | 7107268 | B2 | 27 July 2022 |
| | | | | US | 11635520 | B2 | 25 April 2023 |
| | | | | US | 2022-0043150 | A1 | 10 February 2022 |
| | | | | WO | 2020-153453 | A1 | 30 July 2020 |
| JP | 2001-108747 | A | 20 April 2001 | None | | | |
| KR | 10-2018-0083983 | A | 24 July 2018 | None | | | |
| JP | 2014-185956 | A | 02 October 2014 | None | | | |
| JP | 2022-101264 | A | 06 July 2022 | US | 2022-0206164 | A1 | 30 June 2022 |

Form PCT/ISA/210 (patent family annex) (July 2022)